# FASCICULE DE BREVET EUROPEEN

(11) **EP 1 809 526 B1**
(45) Date de publication et mention de la délivrance du brevet: **11.03.2009**
(21) Numéro de dépôt: 05814947.7
(22) Date de dépôt: 26.10.2005
(51) Int. Cl.: B62D 1/19

(54) **DISPOSITIF DE LIAISON ENTRE LA COLONNE DE DIRECTION ET LA CAISSE D'UN VEHICULE AUTOMOBILE**
VERBINDUNGSVORRICHTUNG ZWISCHEN EINER LENKSÄULE UND EINEM KRAFTFAHRZEUGAUFBAU
CONNECTING DEVICE BETWEEN A STEERING COLUMN AND A MOTOR VEHICLE BODY

(30) Priorité: 28.10.2004 FR 0411555
(43) Date de publication de la demande: 25.07.2007
(73) Titulaire: Faurecia Interieur Industrie, 92000 Nanterre (FR)
(72) Inventeur: BAUDART, Laurent, F-60530 FRESNOY EN THELLE (FR)
(74) Mandataire: Domenego, Bertrand
(86) Numéro de dépôt international: PCT/FR2005/002687
(87) Numéro de publication internationale: WO 2006/045961

(56) Documents cités:
- DE-A1- 10 036 397
- PATENT ABSTRACTS OF JAPAN vol. 2000, no. 07, 29 septembre 2000 (2000-09-29) -& JP 2000 095115 A (SUZUKI MOTOR CORP), 4 avril 2000 (2000-04-04)

## Description

La présente invention concerne un dispositif de liaison entre une colonne de direction d'un véhicule automobile et une traverse solidaire de la caisse du véhicule, le dispositif étant du type comportant un support de colonne de direction solidaire de ladite colonne et fixé à un bras rigide relié rigidement à la traverse, la connexion entre le bras et le support de colonne étant déformable sous l'effet d'un choc frontal exercé sur la traverse, tel que décrit, par exemple, dans US 4 943 028.

Il est connu que, pour des raisons de sécurité et de protection des personnes installées dans un véhicule automobile, l'habitacle de celui-ci doit, lors d'une collision, rester le plus rigide possible pendant que les parties extérieures, avant ou arrière, se déforment pour absorber l'énergie cinétique.

Un élément particulier de cet habitacle est la colonne de direction. Celle-ci comporte des contraintes particulières liées à ses fonctions et à son positionnement puisqu'une partie importante de celle-ci s'étend dans la partie avant, déformable, du véhicule. Or, du fait que le volant est un élément proche du corps du conducteur, il est particulièrement important que celui-ci, et donc la partie supérieure de la colonne de direction, ne recule pas dans l'habitacle.

Cependant, les constructeurs automobiles cherchent également à améliorer le confort de leurs véhicules. Un élément important de cette amélioration est la diminution, voire la suppression, des vibrations.

Concernant la colonne de direction, un moyen bien connu de réduire ces vibrations est de la fixer rigidement, par une pièce intermédiaire à la Traverse Inférieure de Base. Cette traverse qui participe à la rigidité du véhicule est située entre la zone moteur et l'habitacle, à l'avant et parallèlement à la planche de bord.

Cette traverse fait partie des éléments de déformation du véhicule. Il est ainsi prévu que cette traverse puisse reculer de 80 mm lors d'un choc frontal de 60 km/h.

Or, la liaison rigide entre cette traverse et la colonne de direction propage ce déplacement, dans sa quasi-totalité, au volant. De ce fait, celui-ci ne respecte plus les normes de sécurité en sortant du couloir de déformation autorisée.

Le but de l'invention est donc de remédier à cet inconvénient par un dispositif, de structure particulièrement simple et économique, qui assure à la fois le confort par la réduction des vibrations et la sécurité par un déplacement limité du volant en cas de choc.

Le document DE- 100 36 397 décrit un dispositif de liaison dans lequel la déformation entre le bras et le support se fait par pliage de deux parties de tôles pliées selon des axes verticaux.

L'objet de l'invention est un dispositif de liaison du type précité, selon la revendication 1.

D'autres caractéristiques de l'invention sont :
- le support comporte en outre, de chaque côté de ladite partie d'extrémité, des rebords longitudinaux orientés sensiblement verticalement
- lesdits rebords sont obtenus par pliage de ladite tôle ; et
- le support comporte en outre, de chaque côté de ladite partie d'extrémité, des languettes pliées autour d'un axe oblique faisant un angle supérieur à 30° par rapport à l'axe de pliage de l'extrémité.

L'invention sera mieux comprise à la lumière de la description qui va suivre, donnée uniquement à titre d'exemple, et faisant référence aux dessins annexés et dans lesquels ;
- la figure 1 est une vue schématique de côté du dispositif ;
- la figure 2 est une vue en perspective de l'extrémité avant du dispositif ;
- les figures 3A et 3B sont des vues schématiques du dispositif avant et après un choc frontal ;
- la figure 4 est une vue en perspective d'une variante du dispositif.

Dans ce qui suit, les expressions « avant », « arrière », « supérieur », « inférieur », etc. sont considérées comme rapportées à un véhicule.

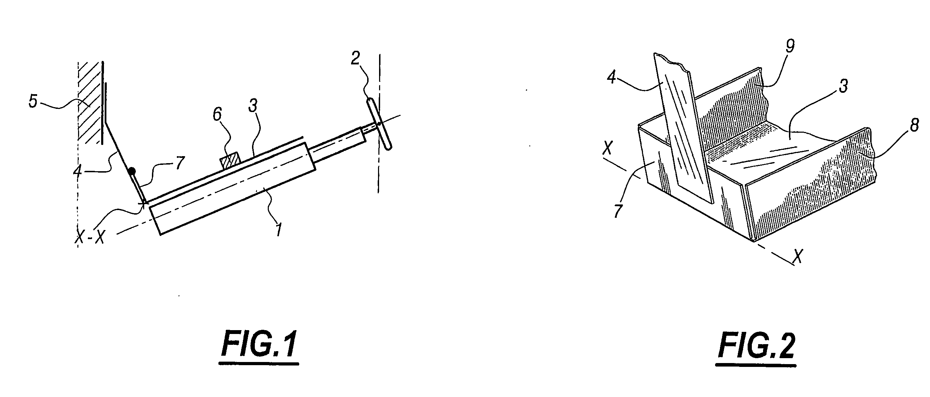

Une colonne de direction 1 est représentée sur la figure 1. Elle comporte un volant 2 à son extrémité arrière. Cette colonne de direction 1 est solidaire d'un support 3 qui la maintient en place. Ce support 3 est fixé, par l'intermédiaire d'un bras rigide 4, à une traverse 5 solidaire de la caisse du véhicule.

Le bras rigide 4 est fixé par soudage ou boulonnage à la traverse 5 et au support 3.

De façon classique, le support 3 est également fixé à une traverse rigide 6 du tableau de bord.

L'extrémité inférieure du bras rigide 4 est fixé sur une partie d'extrémité 7 du support 3 constituée par le pliage vers le haut de 90° d'une tôle constituant le support 3 autour d'un axe X-X sensiblement perpendiculaire à l'axe de la colonne de direction, figure 2.

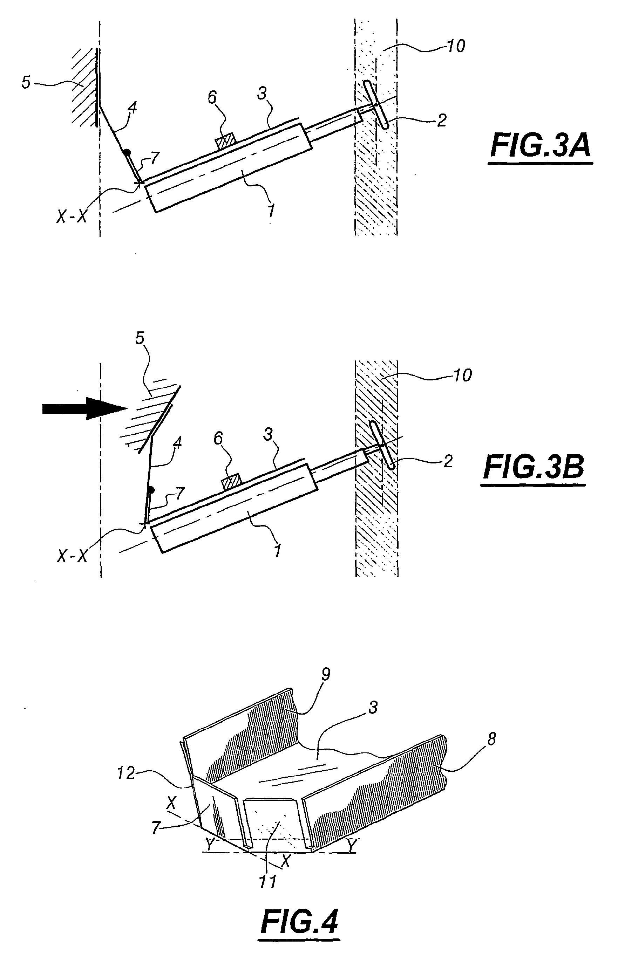

Le fonctionnement du dispositif va maintenant être explicité en relation avec les figures 3A et 3B.

La figure 3A représente le dispositif avant déformation. Le volant 2 est ainsi situé dans une zone 10 représentant les limites maximales de déplacement autorisées en cas de choc afin de respecter les règles de sécurité.

Lors d'un choc frontal sur le véhicule, figure 3B, celui-ci se répercute en partie jusqu'à la traverse 5 et pousse donc celle-ci vers l'arrière. En revanche, la traverse 6 n'est pas sensiblement déplacée vers l'arrière et constitue donc un point d'appui pour le support 3.

La tôle du support 3 ayant été préalablement pliée autour de l'axe X-X, la résistance à la flexion du support est diminuée le long de cet axe de pliage. En conséquence, l'extrémité 7 du support accompagne le bras 4 en refermant l'angle de pliage.

De ce fait, la colonne de direction 1 ne recule dans l'habitacle que faiblement, permettant au volant 2 de rester à l'intérieur de la zone 10 des limites maximales de déplacement.

En fonctionnement normal du véhicule, c'est-à-dire en dehors d'une collision, le support de direction 3 et le bras 4 ont également pour fonction de diminuer les vibrations sur la colonne de direction 1, en particulier les vibrations verticales.

A cette fin, le support 3 doit offrir une bonne rigidité. Celle-ci est atteinte, figure 2, par la création de rebords 8, 9 longitudinaux orientés sensiblement verticalement. Les rebords peuvent être constitués par pliage de la tôle du support 3 ou par l'apport de pièces fixées rigidement, de préférence par soudage.

Dans une variante du dispositif, figure 4, le support 3 comporte, de chaque côté de l'extrémité 7 d'attache du bras, des languettes 11, 12 pliées autour d'un axe oblique respectif Y-Y faisant un angle supérieur à 30° par rapport à l'axe X-X de pliage de l'extrémité 7. Les languettes 11, 12 participent à la rigidité du support 3 en complément des rebords 8,9.

Dans les dessins, l'extrémité 7 d'attache ainsi que les rebords 8, 9 et les languettes 11,12 ont été représentées pliées vers le haut.

L'homme du métier comprend que le dispositif décrit fonctionne également quand le pliage est effectué vers le bas.

## Revendications

1. Dispositif de liaison entre une colonne de direction (1) d'un véhicule automobile et une traverse (5) solidaire de la caisse du véhicule, le dispositif étant du type comportant un support (3) de colonne de direction solidaire de ladite colonne (1) et fixé à un bras (4) rigide relié rigidement à la traverse (5), la connexion entre le bras (4) et le support (3) de colonne étant déformable sous l'effet d'un choc frontal exercé sur la traverse (5), **caractérisé en ce que** la déformation se produit par pliage d'une partie d'extrémité (7) d'une tôle dudit support (3), ladite partie (7) étant préalablement pliée vers le haut d'un angle de 90° par rapport au support autour d'un axe (X-X) sensiblement perpendiculaire à la direction de la déformation et fixé au bras (4).

2. Dispositif de liaison selon la revendication 1, **caractérisé en ce que** le support (3) comporte en outre, de chaque côté de ladite partie d'extrémité (7), des rebords (8, 9) longitudinaux orientés sensiblement verticalement.

3. Dispositif de liaison selon la revendication 2, **caractérisé en ce que** lesdits rebords sont obtenus par pliage de ladite tôle.

4. Dispositif de liaison selon les revendications 1 à 3, **caractérisé en ce que** le support (3) comporte en outre, de chaque côté de ladite partie d'extrémité (7), des languettes (11, 12) pliées autour d'un axe oblique faisant un angle supérieur à 30° par rapport à l'axe (X-X) de pliage de ladite partie d'extrémité (7).

## Claims

1. A connecting device between a steering column (1) of a motor vehicle and a cross member (5) attached to the body of the vehicle, the device being of the type comprising a steering column support (3) attached to said column (1) and secured to a rigid arm (4) rigidly connected to the cross member (5), the connection between the arm (4) and the column support (3) being deformable under the action of a frontal shock exerted on the cross member (5), **characterised in that** the deformation takes place by the bending of an end portion (7) of a plate of said support (3), said portion (7) having been previously bent upwards at an angle of 90° in relation to the support about an axis (X-X) substantially perpendicular to the deformation direction and being secured to the arm (4).

2. A connecting device according to claim 1, **characterised in that** the support (3) further comprises, on either side of said end portion (7), longitudinal flanges (8,9) which are substantially vertically directed.

3. A connecting device according to claim 2, **characterised in that** said flanges are formed by bending said plate.

4. A connecting device according to claims 1 to 3, **characterised in that** the support (3) further comprises, on either side of said end portion (7), flaps (11,12) bent about an oblique axis forming an angle greater than 30° in relation to the bending axis (X-X) of said end portion (7).

## Patentansprüche

1. Verbindungsvorrichtung zwischen einer Lenksäule (1) eines Kraftfahrzeugs und einem Querträger (5), welcher mit der Fahrzeugkarosserie verbunden ist, wobei die Vorrichtung in der Ausführung ausgebildet ist, die einen mit der Säule (1) verbundenen Lenksäulenträger (3) aufweist, und an einem starren Arm (4), der starr an dem Querträger (5) angebracht ist, befestigt ist, wobei die Verbindung zwischen dem Arm (4) und dem Säulenträger (3) unter der Einwirkung eines auf den Querträger (5) ausgeübten Frontalaufpralls deformierbar ausgebildet ist, **dadurch gekennzeichnet, dass** die Deformierung durch Faltung eines Endabschnitts (7) eines Bleches des Trägers (3) vorgesehen ist, wobei der Abschnitt (7) vorab nach oben unter einem Winkel von 90° in Bezug auf den Träger um eine Achse (X-X), die im Wesentlichen senkrecht zur Richtung der Deformierung verläuft, gefaltet und an dem Arm (4) befestigt ist.

2. Verbindungsvorrichtung nach Anspruch 1, **dadurch gekennzeichnet, dass** der Träger (3) weiterhin auf jeder Seite des Endabschnitts (7) längs verlaufende Randleisten (8, 9) aufweist, welche im Wesentliche vertikal ausgerichtet sind.

3. Verbindungsvorrichtung nach Anspruch 2, **dadurch gekennzeichnet, dass** die Randleisten durch Faltung des Bleches erzeugt sind.

4. Verbindungsvorrichtung nach den Ansprüchen 1 bis 3, **dadurch gekennzeichnet, dass** der Träger (3) weiterhin auf jeder Seite des Endabschnitts (7) Laschen (11,12) aufweist, welche um eine Achse herum gefaltet sind, die unter einem Winkel von mehr als 30° in Bezug auf die Achse (X-X) der Faltung des Endabschnitts (7) schräg verläuft.
